# EUROPÄISCHE PATENTSCHRIFT

(11) **EP 0 453 820 B1**
(45) Veröffentlichungstag und Bekanntmachung des Hinweises auf die Patenterteilung: **12.10.1994**
(21) Anmeldenummer: 91105126.6
(22) Anmeldetag: 30.03.1991
(51) Int. Cl.: G01N 27/00, G01N 29/00

(54) **Sensor zum Nachweisen eines Stoffes in einer Flüssigkeit**
Sensor for detecting a substance in a liquid
Capteur pour la détection d'une substance dans un liquide

(30) Priorität: 27.04.1990 DE 4013665
(43) Veröffentlichungstag der Anmeldung: 30.10.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: Kösslinger, Conrad, W-8000 München 19 (DE)
(74) Vertreter: Schoppe, Fritz, Dipl.-Ing.

(56) Entgegenhaltungen:
- DE-A- 3 446 612
- ANALYTICAL CHEMISTRY. Bd. 61, no. 11, Juni 1989, COLUMBUS US Seiten 1227 -1230; K.A. DAVIES ET AL: "Continuous liquid-phase piezoelectric biosensor for kinetic immunoassays"
- PROCEEDINGS OF IEEE 1988 ULTRASONICS SYMPOSIUM. Bd.1 , ed. B.R. McAVOY, 1989,NEW YORK US Seiten 607-611 ; S.T. MARTIN ET AL: "Sensing in liquids with SH plate mode devices"
- ANALYTICAL ABSTRACTS DATABASE Royal Society of Chemistry, CAMBRIDGE GB T.NOMURA ET AL: "Crystal mass -change sensor using frequency difference between two piezoelectric quartz crystals"; Accession No. 52-04-J-00001

## Beschreibung

Die vorliegende Erfindung betrifft einen Sensor zum Nachweisen eines Stoffes oder zum Messen der Konzentration desselben in einer Flüssigkeit, mit einem Gehäuse, das zwei gegeneinander festlegbare Gehäuseteile aufweist, einem Resonator, der an einer seiner Seitenflächen mit der Flüssigkeit in Kontakt steht und auf eine Massenanlagerung des nachzuweisenden bzw. in seiner Konzentration zu messenden Stoffes durch Änderung seiner Resonanzfrequenz anspricht und mit einer zwischen dem Gehäuse und dem Resonator angeordneten Dichtungseinrichtung nach dem Oberbegriff des Patentanspruchs 1.

Insbesondere betrifft die vorliegende Erfindung das Gebiet der piezoelektrischen Schwingquarzsensoren, die zum Nachweis bzw. zur Messung der Konzentration von biologischen, chemischen oder biochemischen Substanzen sowie von Mikroorganismen in Flüssigkeiten dienen.

Ein Sensor der eingangs genannten Art ist bereits aus der Fachveröffentlichung K.A. Davis, T.R. Leary, Anal. Chem. 61 (1989), Seiten 1227 bis 1230 bekannt. Diese Fachveröffentlichung offenbart einen Sensor der eingangs genannten Art, der als Biosensor zum Erfassen der Antikörper eines Immunoglobulins ausgeführt ist. Bei dem bekannten Sensor besteht das Gehäuse aus zwei gegeneinander festlegbaren Gehäuseteilen, die jeweils aus Plexiglas gefertigt sind. Der Resonator ist ein Schwingquarz, der auf einer Seite mit dem Protein A beschichtet ist, mit dem das Immunoglobulin reagiert. Diese Reaktion führt zu einer Massenanlagerung an der so beschichteten Seitenfläche des Schwingquarzes, die wiederum dessen Resonanzfrequenz reduziert. Diese Frequenzreduktion wird als Maß der Immunoglobulinkonzentration ausgewertet. Beide Gehäuseteile sind mit O-Ringen, die aus Neopren bestehen, gegen den Schwingquarz abgedichtet. Der Schwingquarz weist Goldelektroden auf, an denen mit Silberepoxid Drähte leitend befestigt sind, die zwischen den Gehäuseteilen aus dem Gehäuse herausgeführt werden. Das aus Plexiglas bestehende Gehäuse muß zur Reduktion seiner Wechselwirkung mit biologischen Substanzen und Mikroorganismen zusätzlich behandelt werden. Die O-Ring-Dichtungen können nur zum Abdichten von verhältnismäßig großen Schwingquarzen gegenüber dem Gehäuse verwendet werden, so daß dieser bei vergleichsweise niedrigen Resonanzfrequenzen von etwa 10 MHz betrieben werden muß. Aus der niedrigen Resonanzfrequenz ergibt sich eine niedrige Meßempfindlichkeit des bekannten Biosensors.

Aus der Fachveröffentlichung W. Stöckel, R. Schumacher, Ber. Bunsenges. Phys. Chem. 91, (1987), Seiten 345 bis 349 ist ein weiterer Sensor bekannt, der zwei gegeneinander verschraubbare Gehäuseteile hat. Der als Schwingquarz ausgeführte Resonator ist gegenüber dem Gehäuse durch zwei Dichtungen abgedichtet, von denen eine in Längserstreckung des Resonators außerhalb desselben um diesen verläuft, und von denen die andere als kreisringförmige Dichtung mit etwa gleichmäßigem Abstand vom Rand des Resonators auf einer Seite desselben verläuft. Auch bei einem derartigen Sensor können nur niederfrequente Schwingquarze mit einer Resonanzfrequenz von maximal 10 MHz als Resonatoren eingesetzt werden. Daher hat auch dieser bekannte Sensor eine vergleichsweise niedrige Massenempfindlichkeit, da die Massenempfindlichkeit proportional zum Quadrat der Resonanzfrequenz des Resonators ist. Bei diesem bekannten Sensor müssen die Schwingquarze zu ihrer Kontaktierung ganzflächig mit einer leitenden Elektrodenschicht bedeckt sein. Somit wird bei dem bekannten Sensor dessen Schwingung durch Randeinflüsse, wie sie bespielsweise durch die Quarzhalterung erzeugt werden, beeinflußt.

Aus der Fachveröffentlichung M. Thompson, G.K. Dhaliwal, C.L. Arthur, G.S. Calabrese, IEEE Transactions on ultrasonics, ferroelectrics and frequency control, Vol. UFFC-34 No.2, März 1987 ist ein weiterer Sensor bekannt, dessen Funktion und Struktur im wesentlichen der Funktion und Struktur des aus der erstgenannten Entgegenhaltung bekannten Sensors entsprechen. Bei diesem Sensor besteht jedoch das Gehäuse aus Perspex. In Übereinstimmung mit dem eingangs beschriebenen Sensor wird auch hier die Dichtungsvorrichtung durch zwei O-Ringe gebildet. Die bei diesem Sensor auftretenden Probleme entsprechen somit im wesentlichen den Nachteilen des eingangs beschriebenen Sensors.

Die GB-Z., J. Physics E: Sci. Instr.; Vol. 14, H1, 1981, S. 113 - 116 betrifft keinen gattungsgemäß vorausgesetzten Sensor, dessen Resonator durch Massenanlagerung auf einen nachzuweisenden Stoff anspricht, sondern lediglich eine Ultraschallpulszelle zur Absorptionsmessung bei kleinen Flüssigkeitsproben. Um die Erhöhung der Massenempfindlichkeit geht es demnach bei derartigen Strukturen nicht. Ferner hat die Pulszelle lediglich eine Gummischeibendichtung und einen PTFE-Dichtricht, welche anscheinend an entgegengesetzten Seiten des piezoelektrischen Schwingers angeordnet sind.

Die GB-Z., J. Physics E: Sci. Instr.; Vol. 21, 1988, S. 98 - 103 befaßt sich mit einer Absorptionsspektroskopie von Flüssigkeiten durch Messung des Übertragungsverhaltens von Ultraschallpulsen in der Flüssigkeit und befaßt sich nicht mit einer gattungsgemäß vorausgesetzten Meßtechnik. Auch hier geht es nicht darum, eine Massenempfindlichkeit eines Resonators zu erhöhen. Die Figur 3 dieser Schrift zeigt lediglich eine Übertragerstruktur, bei der ein piezoelektrischer Schwinger zwischen einem hohlen Glaszylinder einerseits und einem Telflon-Dichtring andererseits eingespannt ist.

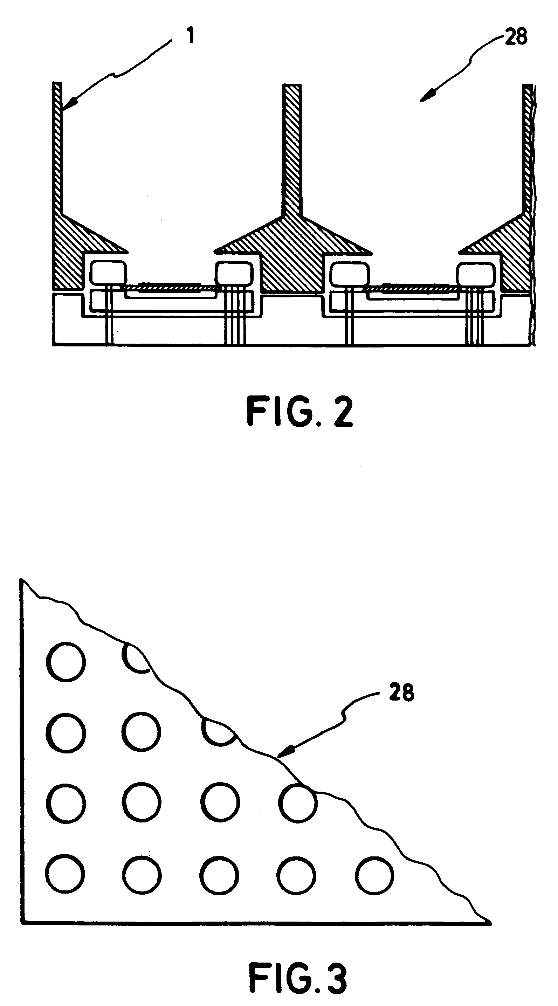

Bei der DE 34 46 612 A1 geht es um eine Resonatorstruktur, bei der ein piezoelektrischer Resonator innerhalb eines hermetisch abgedichteten, vorzugsweise evakuierten Gehäuses schwingt. Das Gehäuse umfaßt zwei Gehäusehälften. Zwischen den Gehäusehälften gemäß Figur 2 liegen zwei Anschlußleiterstrukturen, die zur elektrischen Kontaktierung und Halterung des Resonators dienen. Das Gehäuse selbst besteht aus zwei Hälften, die miteinander an Dichtflächen verbunden sind, zwischen denen ein Dichtungsmaterial liegt.

Letztlich zeigt die GB 22 15 049 A1 nur eine Schallzelle zur Untersuchung von Flüssigkeiten aufgrund der Messung der Schallaufzeit innerhalb der Flüssigkeit. Es geht bei diesem Sensor also nicht um eine Struktur zum Nachweisen eines Stoffes durch Änderung der Resonanzfrequenz eines Resonators, der mit der Flüssigkeit in Kontakt steht, sondern allein um eine Schallaufzeit, wobei für letztere Fragen der Massenempfindlichkeit unmaßgeblich sind.

Gegenüber diesem Stand der Technik liegt der vorliegenden Erfindung die Aufgabe zugrunde, einen Sensor der eingangs genannten Art so weiterzubilden, daß er trotz einfacher Herstellbarkeit eine erhöhte Massenempfindlichkeit aufweist.

Diese Aufgabe wird erfindungsgemäß bei einem Sensor nach dem Oberbegriff des Patentanspruchs 1 durch die im kennzeichnenden Teil des Patentanspruchs 1 angegebenen Merkmale gelöst.

Der erfindungsgemäße Sensor weist nicht nur eine hohe Massenempfindlichkeit durch eine optimierte Lagerung des Resonators gegenüber dem Gehäuse innerhalb der beiden gegossenen Silikondichtungen auf, die die Verwendung dünnerer, höherfrequenter und damit empfindlicherer Resonatoren gestatten, sondern zeichnet sich gleichfalls durch eine Eignung als Biosensor aus.

Bevorzugte Weiterbildungen des erfindungsgemäßen Sensors sind in den Unteransprüchen angegeben.

Nachfolgend werden unter Bezugnahme auf die beiliegenden Zeichnungen bevorzugte Ausführungsformen des erfindungsgemäßen Sensors näher erläutert. Es zeigen:
- Fig. 1: eine Vertikalschnittdarstellung durch eine erste Ausführungsform des erfindungsgemäßen Sensors;
- Fig. 2: eine Vertikalschnittdarstellung durch eine zweite Ausführungsform des erfindungsgemäßen Sensors;
- Fig. 3: eine Draufsichtdarstellung auf die Ausführungsform gemäß Fig. 2 in schematisierter Darstellung; und
- Fig. 4: eine Gehäusehälfte einer dritten Ausführungsform des erfindungsgemäßen Sensors.

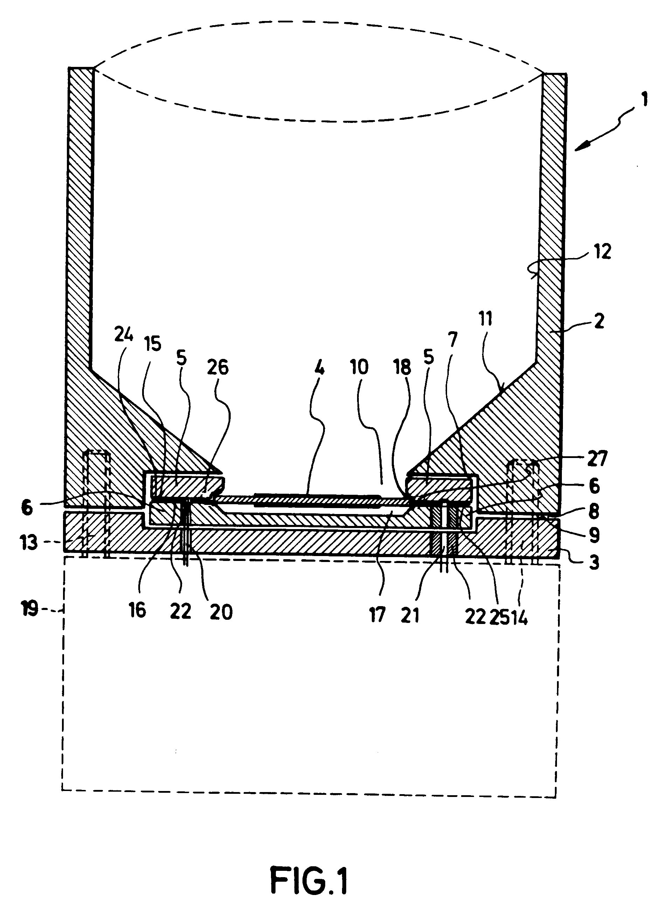

Wie in Fig. 1 gezeigt ist, umfaßt der erfindungsgemäße Sensor, der in seiner Gesamtheit mit dem Bezugszeichen 1 bezeichnet ist, im wesentlichen ein Gehäuse mit zwei gegeneinander festlegbaren Gehäuseteilen 2, 3. Sowohl das erste Gehäuseteil 2 wie auch das zweite Gehäuseteil 3 sind im wesentlichen rotationssymmetrisch ausgebildet und bestehen aus Edelstahl. Ein als Schwingquarz ausgeführter, im wesentlichen kreisplattenförmiger Resonator 4 liegt, wie nachfolgend näher erläutert wird, zwischen einer ersten und einer zweiten Silikondichtung 5, 6, die ihrerseits in einer im wesentlichen zylindrischen Ausnehmung 7 angeordnet sind, die im Berührungsbereich der beiden Gehäuseteile 2, 3 miteinander angeordnet ist. Die Trennflächen 8, 9 des ersten Gehäuseteiles 2 von dem zweiten Gehäuseteil 3 sind derart angeordnet, daß sie sich bis zu der zylindrischen Ausnehmung 7 erstrecken.

In axialer Richtung oberhalb der zylindrischen Ausnehmung 7 weist das erste Gehäuseteil 2 eine kreisförmige Öffnung 10 oberhalb des Resonators 4 auf, die sich mit zunehmendem Abstand vom Resonator 4 in Form eines Kegelstumpfes 11 erweitert, um in einen Hohlzylinder 12 überzugehen.

Die beiden Gehäuseteile 1, 2 sind mittels Schrauben 13, 14, die in Fig. 1 nur schematisch dargestellt sind, gegeneinander befestigt. Die Axialerstreckung der zylindrischen Ausnehmung 7 ist geringfügig geringer als diejenige der beiden obereinander angeordneten Silikondichtungen 5, 6, so daß die Gehäuseteile 2, 3 mittels der Schrauben 13, 14 einen einstellbaren Druck auf die Silikondichtungen 5, 6 ausüben.

Bei der in Fig. 1 gezeigten bevorzugten Ausführungsform, die im wesentlichen rotationssymmetrisch ausgeführt ist, sind auch die beiden Silikondichtungen 5, 6 im wesentlichen rotationssymmetrisch ausgestaltet. Beide Silikondichtungen 5, 6 erstrecken sich in der Radialerstreckung des im wesentlichen scheibenförmigen Resonators 4 über dessen Randbereich hinaus und weisen Anlageflächen 15, 16 radial außerhalb des Resonators 4 auf, an denen sie direkt oder indirekt gegeneinander anliegen. Die untere, zweite Silikondichtung ist im wesentlichen scheibenförmig ausgeführt und weist eine zylindrische Dichtungsausnehmung 17 auf, deren Durchmesser geringfügig geringer als derjenige des Resonators 4 ist. Die erste Silikondichtung 5 hingegen ist im wesentlichen kreisringförmig ausgestaltet, wobei der Innendurchmesser des Kreisringes geringfügig geringer als der Außendurchmesser des Resonators 4 dimensioniert ist.

Ferner verfügt die erste Silikondichtung 5 auf ihrer dem Resonator 4 zugewandten Seite eine zylindrische Aussparung 18, deren Durchmesser demjenigen des Resonators und deren Dicke derjenigen des Resonators 4 entspricht. Damit umschließen die beiden Silikondichtungen 5, 6 den Resonator an seinem in radialer Richtung äußersten Randbereich.

Unterhalb des Gehäuses 2 ist eine Elektronikeinheit 19 vorgesehen, die zum Treiben des Resonators 4 sowie zum Messen seiner Resonanzfrequenz dient. Die Struktur und Funktion einer derartigen Elektronikeinheit 19 ist an sich im Stand der Technik bekannt, so daß auf deren Erläuterung verzichtet werden kann.

Die Elektronikeinheit 19 steht mit dem Resonator 4 über zwei Kontaktdrähte 20, 21 in Verbindung, von denen zumindest einer 21 mittels einer Isolierungsdurchführung 22 durch das zweite Gehäuseteil 3 geführt ist. Beide Kontaktdrähte 20, 21 erstrecken sich im wesentlichen in der axialen Richtung der Gesamtanordnung durch die zweite Silikondichtung 6, die zu diesem Zwecke mit entsprechenden Durchgängen 22, 23 versehen ist. Im Bereich der der Elektronikeinheit 19 abgewandten Enden der Kontaktdrähte 20, 21 sind diese mit leitfähigen Klebstoffkörpern 24, 25 verbunden, die sich von diesen bis zu den Kontaktbereichen des Resonators 4 erstrecken. Die Klebstoffkörper sind aus einem zwischen die beiden Silikondichtungen 5, 6 eingebrachten, leitfähigen Klebstoff gebildet.

Zur Lagebestimmung der Drehlage des Resonators 4 gegenüber den beiden Dichtungen 5, 6 ist die erste Dichtung 5 mit vier im 90°-Winkelabstand zueinander versetzten Nocken 26, 27 versehen.

Wie bei der Ausführungsform gemäß Fig. 2 zu erkennen ist, kann eine Mehrzahl von Sensoren 1 zu einem Sensorfeld 28 zusammengesetzt werden. Mittels eines solchen Sensorfeldes können beispielsweise Messungen mehrerer Stoffe gleichzeitig vorgenommen werden oder die Verteilung eines Stoffes über eine Fläche gemessen werden. In der Draufsicht kann ein derartiges, aus den in Fig. 1 gezeigten Sensoren 1 bestehendes Sensorfeld 28 die in Fig. 3 skizzierte Gestalt haben.

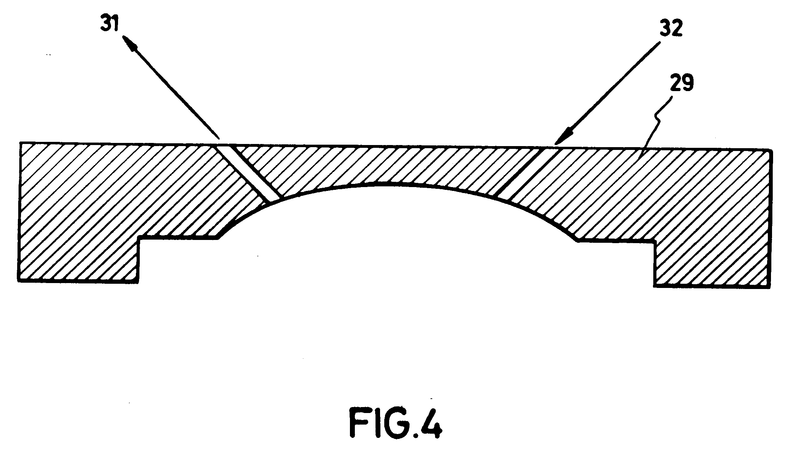

Der in Fig. 1 gezeigte Sensor kann durch Ersatz des dort gezeigten oberen ersten Gehäuseteiles 2 durch einen Gehäusedeckel 29 modifiziert werden, wie dieser in Fig. 4 gezeigt ist. Der Gehäusedeckel 29 verfügt über einen Einlaßkanal 30 sowie über einen Auslaßkanal 31, so daß der Sensor gemäß Fig. 1 bei Verwendung des in Fig. 4 gezeigten Gehäusedeckels 29 als topfartiger Sensor oder als Durchflußzelle arbeiten kann.

Der erfindungsgemäße Sensor ist zur Messung der Konzentration von chemischen oder biochemischen Substanzen sowie von Mikroorganismen geeignet. Er kann überall dort eingesetzt werden, wo die Konzentrationsmessung eines Stoffes oder der Nachweis eines Stoffes in einer Flüssigkeit durch Massenanlagerung an eine geeignet präparierte Oberfläche eines Schwingquarzes durchführbar ist.

## Patentansprüche

1. Sensor zum Nachweisen eines Stoffes oder zum Messen der Konzentration desselben in einer Flüssigkeit, mit
- einem Gehäuse, das zwei gegeneinander festlegbare Gehäuseteile (2, 3) aufweist,
- einem Resonator (4), der an einer seiner Seitenflächen mit der Flüssigkeit in Kontakt steht und auf eine Massenanlagerung des nachzuweisenden bzw. in seiner Konzentration zu messenden Stoffes durch Änderung seiner Resonanzfrequenz anspricht, und
- einer zwischen dem Gehäuse und dem Resonator (4) angeordneten Dichtungseinrichtung (5, 6), dadurch gekennzeichnet, daß
- die Dichtungseinrichtung eine erste und eine zweite, gegossene Silikondichtung (5, 6) umfaßt,
-- die sich in Richtung der Flächenerstreckung des Resonators (4) über diesen hinauserstrecken,
-- die Anlageflächen (15, 16) zur direkten oder indirekten gegenseitigen Anlage aufweisen, und
-- die ferner derart ausgebildet sind, daß sie den Resonator (4) an dessen in Richtung seiner Flächenerstreckung äußeren Bereich umfassen.

2. Sensor nach Anspruch 1, dadurch gekennzeichnet, daß
- zumindest das mit der Flüssigkeit in Kontakt stehende Gehäuseteil (2) aus Edelstahl besteht.

3. Sensor nach Anspruch 1 oder 2, dadurch gekennzeichnet, daß
- zwischen den Anlageflächen (15, 16) der Silikondichtungen (5, 6) zwei mit dem Resonator (4) sowie mit zwei Anschlußdrähten (20, 21) in elektrisch leitender Verbindung stehende, elektrisch leitfähige Klebstoffkörper (24, 25) angeordnet sind.

4. Sensor nach Anspruch 3, dadurch gekennzeichnet, daß
- eine der beiden Silikondichtungen (5, 6) zwei sich im wesentlichen senkrecht zu den Anlageflächen (15, 16) erstreckende Durchgänge (22, 23) aufweist, durch die sich die Anschlußdrähte (20, 21) zu den leitfähigen Klebstoffkörpern (24, 25) erstrecken.

5. Sensor nach einem der Ansprüche 1 bis 4, dadurch gekennzeichnet, daß
- das Gehäuse (2, 3) im wesentlichen rotationssymmetrisch ausgebildet ist,
- das erste, mit der Flüssigkeit in Kontakt stehende Gehäuseteil (2) eine kreisförmige Öffnung (10) in Richtung zum Resonator (4) hin aufweist, an die sich eine kreisringförmige Dichtfläche anschließt, die durch eine zylindrische Ausnehmung (7) in diesem Gehäuseteil (2) gebildet ist.

6. Sensor nach Anspruch 5, dadurch gekennzeichnet, daß
- die kreisförmige Öffnung (10) in dem ersten Gehäuseteil (2) sich in Richtung vom Resonator (4) weg im wesentlichen kegelstumpfförmig erweitert.

7. Sensor nach Anspruch 5 oder 6, dadurch gekennzeichnet, daß
- zumindest eine der beiden Silikondichtungen (5, 6) mit wenigstens einem Nocken (26, 27) zur Festlegung der Lage des Resonators (4) gegenüber diesen (5, 6) versehen ist.

## Claims

1. A sensor for detecting a substance or for measuring the concentration of said substance in a liquid, comprising
- a housing composed of two housing components (2, 3) which are adapted to be secured in position relative to one another,
- a resonator (4) which is in contact with the liquid at one of its lateral surfaces and which responds by a change in its resonant frequency to a deposition of quantities of the substance which is to be detected or the concentration of which is to be measured, and
- a sealing means (5, 6) arranged between the housing and the resonator (4),
characterized in that
- the sealing means comprises first and second cast silicone sealings (5, 6),
-- which extend in the direction of the areal extension of the resonator (4) beyond said resonator,
-- which include contact surfaces (15, 16) for direct or indirect mutual contact, and
-- which are additionally constructed such that they encompass the resonator (4) in the outer region thereof when seen in the direction of the areal extension of said resonator.

2. A sensor according to claim 1, characterized in that
- at least the housing component (2) which is in contact with the liquid is made from high-quality steel.

3. A sensor according to claim 1 or 2, characterized in that
- the contact surfaces (15, 16) of the silicone sealings (5, 6) have arranged between them two electrically conductive adhesive bodies (24, 25) which are connected in an electrically conductive manner to the resonator (4) as well as to two connecting wires (20, 21).

4. A sensor according to claim 3, characterized in that
- one of the two silicone sealings (5, 6) is provided with two passages (22, 23) which extend essentially at right angles to the contact surfaces (15, 16) and through which said connecting wires (20, 21) extend to said conductive adhesive bodies (24, 25).

5. A sensor according to one of the claims 1 to 4, characterized in that
- that the housing (2, 3) has a substantially rotationally symmetrical shape,
- that the first housing component (2), which is in contact with the liquid, has a circular opening (10) in the direction of the resonator (4), said circular opening (10) being followed by an annular sealing surface formed by a cylindrical recess (7) in said housing component (2).

6. A sensor according to claim 5, characterized in that
- said circular opening (10) provided in the first housing component (2) widens in a direction away from the resonator (4) such that it essentially has the shape of a truncated cone.

7. A sensor according to claim 5 or 6, characterized in that
- at least one of the two silicone sealings (5, 6) is provided with at least one cam (26, 27) used for securing the resonator (4) in position relative to these silicone sealings (5, 6).

## Revendications

1. Capteur pour la détection d'une substance ou pour la mesure de la concentration de celle-ci dans un liquide, avec
- un boîtier qui présente deux éléments de boîtier (2, 3) pouvant être fixés l'un contre l'autre,
- un résonateur (4) qui est en contact avec le fluide par l'une de ses faces latérales et qui réagit, par une modification de sa fréquence de résonance, à une addition en masse de la matière à détecter ou à mesurer quant à sa concentration, et
- un dispositif d'étanchéité (5, 6) disposé entre le boîtier et le résonateur (4),
caractérisé en ce que le dispositif d'étanchéité comprend un premier et un second joint en silicone moulé (5, 6),
- qui s'étendent, dans le sens de l'extension du plan du résonateur (4), au-delà de ce dernier,
- qui présentent des surfaces d'appui (15, 16) pour l'appui direct ou indirect l'un sur l'autre, et
- qui, par ailleurs, se présentent de telle manière qu'ils entourent le résonateur (4) dans sa zone extérieure dans le sens de l'extension de son plan.

2. Capteur suivant la revendication 1, caractérisé en ce qu'au moins l'élément de boîtier (2) se trouvant en contact avec le fluide est en acier inoxydable.

3. Capteur suivant la revendication 1 ou 2, caractérisé en ce qu'entre les surfaces d'appui (15, 16) des joints de silicone (5, 6) sont disposés des éléments en adhésif électroconducteurs (24, 25) se trouvant en communication de conduction électrique avec le résonateur (4) ainsi qu'avec deux fils de connexion (20, 21).

4. Capteur suivant la revendication 3, caractérisé en ce que l'un des deux joints de silicone (5, 6) présente deux passages (22, 23) s'étendant sensiblement perpendiculairement aux surfaces d'appui (15, 16), à travers lesquels s'étendent les fils de connexion (20, 21) vers les éléments en adhésif conducteurs (24, 25).

5. Capteur suivant l'une des revendications 1 à 4, caractérisé en ce
- que le boîtier (2, 3) se présente de manière sensiblement symétrique en rotation,
- que le premier élément de boîtier (2) se trouvant en contact avec le liquide présente une ouverture circulaire (10) en direction du résonateur (4), à laquelle aboute une surface d'étanchéité circulaire qui est formée par un évidement cylindrique (7) dans cet élément de boîtier (2).

6. Capteur suivant la revendication 5, caractérisé en ce que l'ouverture circulaire (10) dans le premier élément de boîtier (2) s'évase de manière sensiblement tronconique en direction s'éloignant du résonateur (4).

7. Capteur suivant la revendication 5 ou 6, caractérisé en ce qu'au moins l'un des deux joints de silicone (5, 6) est pourvu d'au moins une came (26, 27) destinée à fixer la position du résonateur (4) par rapport à celui-ci (5, 6).
